# EUROPEAN PATENT APPLICATION

(11) **EP 4 703 333 A1**
(43) Date of publication of application: **04.03.2026**
(21) Application number: 24197448.4
(22) Date of filing: 30.08.2024
(51) Int. Cl.: C04B 24/08, C04B 24/32, C04B 28/04, C04B 103/52

(54) **MULTIFUNCTIONAL ADDITIVE FOR GRINDING OF MINERAL BINDER MATERIALS AND COMPOSITIONS MADE THEREOF**

(71) Applicant: Sika Technology AG, 6340 Baar (CH)
(72) Inventor: LUNAU, Madeleine, 69181 Leimen (DE); MAYER, Andreas, 69181 Leimen (DE); MEHR, Christian, 69181 Leimen (DE); SCHRABBACK, Jorg, 69181 Leimen (DE); UNSELD, Johannes Otto, 69181 Leimen (DE)
(74) Representative: Sika Patent Attorneys

(57) **Abstract**

A method for producing a mineral binder comprising a step of grinding raw mineral binder, especially cement clinker, with a grinding aid, whereby the grinding aid comprises at least one non-ionic and/or anionic surfactant, whereby a longest linear chain of consecutive carbon-carbon (C-C) and/or carbon-oxygen (C-O) bonds of the surfactant has 4 - 100, especially 10 - 75, chemical bonds, especially single bonds.

## Description

### Technical field

The invention is concerned with a method for producing a mineral binder, the method comprising a step of grinding raw mineral binder, especially cement clinker, with a grinding aid. A further aspect of the invention is related to a method for producing a mineral binder composition, especially a semi-dry mineral binder composition. Also, the invention is concerned with a mineral binder composition, especially a semi-dry mineral binder composition, and with a molded body obtainable by hardening a mineral composition. Further aspects of the invention are related to different uses of a surfactant in a grinding process and in mineral binder compositions.

### Background art

Cement is a finely ground hydraulic mineral binder, which in particular is used for producing mineral binder compositions such as e.g., mortar and concrete. When water is added, the cement paste that forms cures by hydration to a water-resistant and volume-stable cement stone. For producing cement, cement raw materials, e.g. cement clinker, are milled, to obtain a fine powder.

Likewise, other hydraulic mineral binder materials, latent hydraulic materials and/or pozzolanic materials exist that can be used in combination with or alternatively to cement, such as for example gypsum, slag, fly ash, silica dust and/or natural pozzolans.

For grinding mineral binder materials, it is known to add so-called grinding aids, which can improve the grinding process. Grinding aids are also referred to as grinding additives. Amines or glycols are frequently used as grinding aids. By using grinding aids it is possible, for example, to reduce the energy consumption during the grinding or to accelerate the grinding process and thus increase the throughput in the grinding process. On the other hand, grinding aids in the mineral binder can lead to a change or impairment of the properties of the mineral binder when the latter is for example used for producing mortar or concrete.

Concrete admixtures are organic or inorganic additives for mineral binder compositions, especially concrete or mortar, which influence the properties of the compositions due to chemical and/or physical effects. For example, in the case of fresh concrete or mortar, the processability and the setting behavior can be controlled or improved with admixtures, but the solid concrete or mortar properties such as strength, impermeability, durability and freeze/thaw resistance can also be positively influenced by admixtures. Depending on the targeted properties, such admixtures may be plasticizers, superplasticizers, retarders, accelerators, performance enhancers for improving (early) strength, air entraining agents, defoamers, stabilizers, biocides and the like.

Concrete admixtures are in general added during the production of the mortar or of the concrete to the mixture made of cement, water, sand and/or gravel and optionally other additives.

Mineral binder compositions are widely used for various construction work. For proper processing and hardening as well as to obtain desired properties of products made from such compositions, formulations of the mineral binder compositions must be carefully adapted to the respective requirements.

For example, the water to cement ratio needs to be adjusted such that a desired viscosity or workability is obtained. However, the content of water not only affects the viscosity or workability of the mineral binder composition during processing but also the hardening process and the final strength of the hardened mineral binder composition. To better control workability and final properties of the mineral binder compositions, it is common practice to make use of so-called plasticizers or water-reducing agents. These are chemical admixtures used in mineral binder compositions, e.g. concrete and mortar mixtures, to reduce the amount of water needed while maintaining the desired workability and performance. By incorporating plasticizers, such as e.g. polycarboxylates or lignosulfonates, several benefits, including improved strength, durability, and workability of the mineral binder composition can be achieved.

Especially, with semi-dry concrete, the water content is an important issue. Semi-dry concrete typically refers to a concrete mix that has a water content between that of dry-mix concrete and conventional wet-mix concrete. This results in a mix that is more workable than dry concrete but not as fluid as traditional wet concrete. The specific characteristics of semi-dry concrete can vary depending on the intended application and the materials used in the mix. This type of concrete often is used in situations where a compromise between the ease of placement, shape retention during hardening and the strength of the final product is desirable.

Semi-dry concrete is commonly used (i) for the construction of screeds, pavements, roads, and other flatwork where a level surface is required; (ii) in the production of precast concrete elements such as blocks, paving stones, or other shaped products whereby semi-dry concrete offers the necessary workability for molding and demolding as well as compactability and shape-retention; (iii) for constructing retaining walls, columns, or other structural elements where a balance between workability and stiffness is crucial; (iv) for architectural elements that require a specific surface finish and detailing, whereby the semi-dry concrete allows for more control over the final appearance; (v) for repairing or resurfacing existing structures, and (vi) the production of precast concrete pipes, whereby semi-dry mixes ensure proper compaction and shape retention during the curing process.

However, choosing suitable additives for grinding of mineral binders and controlling the properties of mineral binder compositions is a cumbersome process. Also, additives used in the grinding stage can impair the effect of admixtures added later on to the mineral binder composition or otherwise deteriorate the properties of the mineral binder composition. This is in particular true for mineral binder compositions with special requirements, such as e.g. semi-dry concrete.

Therefore, there is still a need for improved solutions, which have fewer or no such problems.

### Disclosure of the invention

It is an object of the present invention to provide improved methods for grinding mineral binders. Especially, the methods should allow for producing ground mineral binders that improve at least one property of mineral binder compositions produced thereof or only deteriorate the properties of the mineral binder compositions in a non-significant manner. Furthermore, the method should be as flexible and eco-friendly as possible and easy to implement.

Surprisingly, it was found that these objects can be achieved by a method for producing a mineral binder, the method comprising a step of grinding raw mineral binder, especially cement clinker, with a grinding aid, whereby the grinding aid comprises at least one non-ionic and/or anionic surfactant, whereby a longest linear chain of consecutive carbon-carbon (C-C) and/or carbon-oxygen (C-O) bonds of the surfactant has 4 - 100, especially 10 - 75, chemical bonds, especially single bonds.

As it turned out, such kind of surfactants are highly efficient grinding aids, especially for cement grinding. Especially, the grinding time of the raw mineral binder, in particular cement clinker, can be reduced considerably. The mineral binder obtained in this way furthermore has a very good granularity.

At the same time, the surfactants ground together with the mineral binder can give rise to a performance enhancing effect or improve properties of the mineral binder compositions made thereof.

With respect to standard mortars or concrete that are produced without any addition of surfactants, mortars or concrete produced with mineral binders obtained with the method according to the invention feature a higher air void content. Surprisingly, the flow table spread can be increased as well. In practice, this is usually the opposite with standard mortars or concrete.

Thus, the surfactant used in the method according to the invention can act as a combined air entraining agent and plasticizer, especially in standard mortar or concrete composition.

In particular, the method according to the invention is highly beneficial for producing semi-dry concrete products, e.g. bricks or pavers, where high mold filling is key. In semi-dry concrete compositions, a high granularity and an exceptionally high mold filling could be obtained with mineral binders produced by the method according to the invention. A high granularity, i.e. a high flowability of the fresh, uncompacted, semi-dry concrete enables the individual particles of the concrete to be packed as evenly as possible during the filling of the mold with little or no energy input.

With semi-dry concrete compositions, the air void content and strength hardly are affected by the surfactants. Therefore, the surfactants do not deteriorate the semi-dry concrete compositions but help to improve granularity and mold filling.

Also, the method according to the invention simplifies the production of certain mineral binder compositions since no additional admixture needs to be added after the grinding stage. This is in sharp contrast to many other processes where a specific grinding aid needs to be added before grinding and a further admixture needs to be added after grinding in order to improve the properties of the mineral binder composition.

Furthermore, a quantity of additives required in the production of mineral binder compositions from the mineral binders produced according to the inventive method can be reduced, as only one additive is required. This in turn may give rise to a reduction of CO₂ emissions.

Without wishing to be bound by theory, it is believed that these advantages can be achieved because the surfactants according to the invention are particularly finely distributed on the mineral binder particle surfaces during the grinding process.

### Ways of carrying out the invention

A first aspect of the invention relates to a method for producing a mineral binder, the method comprising a step of grinding raw mineral binder, especially cement clinker, with a grinding aid, whereby the grinding aid comprises at least one non-ionic and/or anionic surfactant, whereby a longest linear chain of consecutive carbon-carbon (C-C) and/or carbon-oxygen (C-O) bonds of the surfactant has 4 - 100, especially 10 - 75, chemical bonds, especially single bonds.

The term "mineral binder" denotes a binder, which reacts in the presence of water in a hydration reaction to form solid hydrates or hydrate phases. This can be, for example, a hydraulic binder, a latent hydraulic binder, and/or a pozzolanic binder. Highly preferred are hydraulic binders. Hydraulic binders can set underwater. But it can also be advantageous for the mineral binder to contain other binders in addition to or instead of a hydraulic binder. These are, in particular, latent hydraulic binders and/or pozzolanic binders. Suitable latent hydraulic and/or pozzolanic binders are, e.g., slag, fly ash, silica dust and/or natural pozzolans.

A "mineral binder composition" is meant to be a composition comprising at least a mineral binder and optionally further components.

The mineral binder in the mineral binder composition in particular comprises or consists of cement, especially cement of type CEM I, CEM II, CEM III, CEM IV and/or CEM V, according to the standard EN 197-1:2011.

In one preferred embodiment, with respect to the overall mineral binder content, the mineral binder contains at least 5 wt.-%, especially at least 20 wt.-%, preferably at least 35 wt.-%, especially at least 65 wt.-%, of hydraulic binder, especially cement, and, optionally, 5 to 95 wt.-%, especially 5 to 65 wt.-%, particularly 15 to 35 wt.-%, of latent hydraulic and/or pozzolanic binder.

In the method according to the invention for producing a mineral binder, at least one or preferably all of the raw mineral binder constituents is/are milled in the presence of the at least one non-ionic and/or anionic surfactant.

The raw mineral binder preferably comprises or consists of clinker as the main constituent. The main constituent is meant to be the constituent with the largest weight share in the raw mineral binder.

Especially, the raw mineral binder comprises or consists of cement clinker. Cement clinker is a solid material produced in the manufacture of cement as an intermediary product. Clinker occurs as lumps and/or nodules, usually with 3 millimeters to 25 millimeters in diameter. It is produced by sintering limestone and/or aluminosilicate materials such as clay during the cement kiln stage.

However, cement with smaller particle sizes, e.g. milled cement clinker, can be used as well as the raw mineral binder.

In a particularly preferred embodiment, the raw mineral binder to be milled comprises fly ash and/or rock flour, especially in combination with cement.

In particular, calcium sulfate and/or additional concrete additives can be admixed before and/or after the grinding with at least one non-ionic and/or anionic surfactant, wherein they are preferably added before the grinding.

"Grinding" means that an average particle size of the raw mineral material is reduced and/or the fineness (Blaine value) is increased. The grinding is in particular a dry grinding process. In this case, after the grinding, the ground mineral binder is present in the form of a powder.

Especially, the grinding is performed until the air permeability specific surface area (Blaine value) of the mineral binder is 500 - 10'000 cm²/g, especially 1'000 - 7'000 cm²/g, in particular 2'000 - 6'000 cm²/g or 3'000 - 5'000 cm²/g.

The grinding preferably occurs in a mill, wherein a ball mill, high pressure roll mill and/or vertical roll mill is preferable.

In particular, the at least one surfactant comprises an alkyl chain and optionally an alkylene oxide chain, whereby a chain length of the alkyl chain and the optional alkylene oxide chain of the surfactant, in terms of a number of consecutive carbon-carbon (C-C) and/or carbon-oxygen (C-O) bonds, especially, single bonds, is 4 - 100, especially 10 - 75.

Especially, a hydrophobic section of the surfactant has a linear structure, in particular an unbranched structure.

In particular, an alkyl chain and optionally an alkylene oxide chain of the surfactant has a linear structure, in particular an unbranched structure.

Further preferred, the surfactant is selected from alkoxylated and/or non-alkoxylated fatty alcohols, fatty acids, as well as their sulfonates and/or sulfates; in particular having 4 - 100, especially 10 - 75, carbon and/or oxygen atoms. Specifically, the surfactant preferably is selected from fatty alcohols, alkoxylated fatty alcohols, fatty acids, alkoxylated fatty acids, fatty alcohol sulfonates, fatty alcohol sulfates, alkoxylated fatty alcohol sulfonates, alkoxylated fatty alcohol sulfates; in particular having 4 - 100, especially 10 - 75, carbon and/or oxygen atoms.

Especially, the surfactant is based on C8 - C32 fatty alcohols, especially C12 - C18 fatty alcohols; alkoxylated C8 - C32 fatty alcohols, especially alkoxylated C12 - C18 fatty alcohols; C8 - C32, especially C12 - C18, fatty acids; alkoxylated C8 - C32 fatty acids, especially alkoxylated C12 - C18 fatty acids; C8 - C32, especially C12 - C18, fatty alcohol sulfonates and/or C8 - C32, especially C12 - C18, fatty alcohol sulfates.

Alkoxylated in particular means ethoxylated and/or propoxylated, especially ethoxylated.

Preferably, alkoxylated surfactants comprise 3-25 alkylene oxide units, especially ethylene oxide and/or propylene oxide units, in particular ethylene oxide units.

Especially preferred, the surfactant comprises an alkyl chain with 8 - 32, especially 12 - 18, carbon atoms and optionally 3-25 alkylene oxide groups.

Preferably, the surfactant comprises C12 - C16 fatty alcohols that are ethoxylated with 3-25 alkylene oxide units and/or C16 - C18 fatty alcohols that are ethoxylated with 3-25 alkylene oxide units.

Especially, the alkylene oxide units are ethylene oxide units and/or propylene oxide units, especially ethylene oxide units.

According to a special embodiment, the surfactant comprises a mixture of two chemically different ethoxylated fatty alcohols. Thereby, preferably, a first ethoxylated fatty alcohol in the mixture is selected form C12 - C16 fatty alcohols that are ethoxylated with 3-25 ethylene oxide units and a second ethoxylated fatty alcohol in the mixture is selected from C16 - C18 fatty alcohols that are ethoxylated with 3-25 ethylene oxide units. Preferably, a weight ratio between the two different ethoxylated fatty alcohols is from 40:60 - 60:40, especially 45:55 - 55:45.

A proportion of the surfactant preferably is 0.001 - 0.1 wt.%, especially 0.003 - 0.05 wt.%, in particular 0.006 - 0.015 wt.%, with respect to the weight of the raw mineral binder to be ground.

According to a further preferred embodiment, the surfactant is provided and/or used in the form of a solution in a liquid medium, especially an organic solvent. Thereby, in particular, a weight proportion of the surfactant in the dispersion preferably is from 0.01 - 50 wt.%, especially 0.1 - 20 wt.%, in particular 0.5 - 7 wt.%, with respect to the overall weight of the solution.

A second aspect of the present invention is related to a method for producing a mineral binder composition, especially the semi-dry mineral binder composition, comprising the steps of:
a) Producing a mineral binder with the method as described above.
b) Mixing the ground mineral binder of step a) with aggregates, water and/or further additives to obtain the mineral binder composition.

For preparing a workable mineral binder composition, water is added. The water content for semi-dry mineral binder composition typically depends on the amount of water needed to glue sand or other aggregate together. Semi-dry mineral binder compositions may contain relatively small amounts of mineral binder but require substantial amounts of water leading to high apparent ratio of water to mineral binder. For example, the water to cement ratio of the mineral binder composition can be in the range of 0.3 - 0.8, especially 0.35 - 0.5.

In particular, the mineral binder composition, especially the semi-dry mineral binder composition, comprises aggregates, especially sand and/or gravel, and, with respect to the weight of the mineral binder and the aggregates in the composition, the mineral binder composition comprises 10 - 35 wt.%, especially 15 - 23 wt.% of mineral binder, especially cement, and 65 - 90 wt.%, especially 77 - 85 wt.%, of the aggregates.

The term "aggregates" includes any type of mortar and/or concrete aggregates. In particular, the aggregates feature a density of 2.2 - 3 kg/dm³.

Especially, the aggregates, if present, include stone, gravel, sand powdered quartz, and/or limestone. However, the aggregates may comprise or consist of lightweight aggregates, in particular foamed clay or polystyrene, or heavy aggregates, such as barite, iron ore and the like.

In particular, a grain size of the aggregates is at least 0.125 mm or at least 0.250 mm.

Preferably, the grain size of the aggregates at most 125 mm or at most 32 mm.

Especially, the grain size of the aggregates is >0 - 125 mm, especially from 0.125 - 32 mm, in particular from 0.125 - 16 mm, for example from 0.125 - 8 mm or from 0.125 - 5 mm.

Within the present context, the grain size is determined by sieve analysis, in particular with sieves featuring square openings. Especially, the grain size is expressed by the opening size of the test sieves just passed by the grains or particles concerned.

Additionally, the mineral binder composition may comprise a further additive, especially selected from additives conventionally used in mortar or concrete compositions. Especially, the further additive is selected from surfactants, plasticizers, accelerators, corrosion inhibitors, retarders, shrinkage reducers, antifoams, and/or foam-formers. Thereby, the further additive is chemically and/or physically different from the at least one grinding aid.

The further additive is chemically different from the at least one non-ionic and/or anionic surfactant.

A proportion of the further additive, with respect to the mineral binder, in particular is from 0.0001 - 10 wt.-%, especially 0.001 - 5 wt.%, in particular 0.01 - 2 wt.-%, for example 0.05 - 0.5 wt.%.

Especially, in step b) a semi-dry mineral binder composition is produced.

In particular, the semi-dry mineral binder composition is an earth-moist mineral binder composition. An earth-moist mineral binder composition is a free-flowing mineral binder composition having a consistency to allow compaction, as for example defined in standard DIN EN 13318:2000-12, chapter 5.1.

Particularly, the semi-dry mineral binder composition is a composition that, when subjected to a truncated cone test based on EN 1097-6:2022 (page 43, third-last paragraph), essentially retains its shape.

Thereby, in particular, a mold in the form of a truncated cone is placed on a horizontal metal tray with the largest diameter facing downwards. The truncated cone then is filled with a sample of the semi-dry mineral binder composition and a tamper is placed on the surface of the semi-dry mineral binder composition and the surface is stamped 25 times to compact the semi-dry mineral binder composition, such that the entire surface of the semi-dry mineral binder composition is evenly compacted. Subsequently, the truncated cone is carefully lifted off the compacted semi-dry mineral binder composition. Especially, the so-obtained cone of semi-dry mineral binder composition essentially does not collapse and retains its shape defined by the truncated cone-shaped mold.

In particular, the truncated cone test is performed with a truncated cone with an inner diameter of 40 mm at the upper end and 90 mm at the lower end, which is 75 mm high and has a wall thickness of at least 0.8 mm, and/or the truncated cone test is performed with a truncated cone with an inner diameter of 100 mm at the upper end and 200 mm at the lower end, which is 300 mm high and has a wall thickness of at least 1.6 mm. Preferably, the semi-dry mineral binder composition essentially retains its shape with both of these cones.

Especially, the mineral binder composition is a semi-dry grout, semi-dry mortar, semi-dry concrete, or a semi-dry composition for producing a paver. In particular according to standard DIN EN 1338:2003-08 and/or DIN EN 1339:3003-09.

Especially, the ratio of water to mineral binder of the semi-dry mineral binder composition is in the range of 0.3 - 0.8, preferably 0.35 - 0.5, more preferably 0.35 - 0.45, especially 0.38 - 0.42, particularly 0.39 - 0.41 or 0.4. This is in particular true if the mineral binder composition is a semi-dry mineral binder composition.

For example, a preferred semi-dry mineral binder composition, with respect to the overall weight of the composition, comprises:
- 15 - 21 wt.% mineral binder, especially cement, the mineral binder comprising, with respect to the weight of the mineral binder, 0.001 - 0.1 wt.%, especially 0.003 - 0.05 wt.%, in particular 0.006 - 0.015 wt.%, of the surfactant as described above;
- 70 - 78 wt.% aggregates, especially sand;
- 5-10 wt.%, especially 6 - 8 wt.%, water;

Thereby, preferably, the water to cement ratio is 0.3 - 0.8, preferably 0.38 - 0.42, especially 0.39 - 0.41 or 0.4.

Such a composition for example is suitable for producing precast elements, such as e.g. kerbs or pavers.

A third aspect of the present invention is directed to a mineral binder composition, especially a semi-dry mineral binder composition, in particular obtainable by a method as described above, comprising: a) a mineral binder, b) a grinding aid as described above in connection with the method according to the invention; and, optionally, c) water; and, optionally, d) aggregates and/or further additives.

The mineral binder composition in particular is present as a workable mineral binder composition. In this case, the mineral binder composition comprises water.

A fourth aspect of the present invention is directed to a method for producing a precast element, especially a kerb or a paver, comprising the steps of (i) producing a mineral binder composition with a method as described above and/or providing a mineral binder composition as described above, (ii) placing the mineral binder composition in a mold and, optionally, (ii) compacting the mineral binder composition in the mold, especially by pressing with a stamp.

For example, the precast element is a wall, a ceiling a floor, a tile, a kerb or a paver.

A fifth aspect of the present invention is related to a molded body, especially a paver, obtainable by hardening a mineral binder composition as described above or by a method as described above.

Thereby, in particular, the molded body is a precast element. For example a wall, a ceiling, a floor, a tile, a kerb or a paver. Also, the molded body can be a layer of a pavement.

In a sixth aspect, the invention is related to the use of a surfactant as described above as a grinding aid for grinding a raw mineral binder material to obtain a ground mineral binder. Thereby, preferably, the surfactant is used to reduce the energy consumption during the grinding, to accelerate the grinding process and/or to increase the throughput of the grinding process and/or to increase the granularity of the mineral binder.

A seventh aspect is concerned with the use of a surfactant as described above for entraining air voids in a mineral binder composition and/or for increasing the flow table spread of a mineral binder composition.

Especially, the surfactant is used as a combined air entraining agent and plasticizer in mineral binder composition, especially in standard mortar or concrete.

A standard mortar or concrete composition in particular has a slump of > 100 mm, especially > 160 mm, particularly > 200 - 40 mm and/or the standard mortar or concrete composition is of slump class S3, S4 or S5, in particular S5. Especially, the slump is measured according to standard DIN EN 12350-2:2019.

In particular, the surfactant is used as a combined grinding aid for mineral binder material and air entraining agent and/or plasticizer in mineral binder compositions, especially in standard mortar or concrete.

An eighth aspect is directed to the use of a surfactant as described above to improve compaction of semi-dry mineral binder compositions, increase the uniformity of mold filling of semi-dry mineral binder compositions and/or to increase the granularity of semi-dry mineral binder compositions.

Especially, the surfactant is used as a combined grinding aid for mineral binder material and as a filling and compaction aid for semi-dry mineral binder compositions.

A ninth aspect is directed to the use of a surfactant as described above as a performance enhancer for mineral binders, in particular for improving strength, especially early strength, of mineral binders and/or mineral binder compositions.

Especially, the surfactant is used as a combined grinding aid for mineral binder material and as a performance enhancer for mineral binders, in particular for improving (early) strength of mineral binders and/or mineral binder compositions.

Further advantageous implementations of the invention are evident from the exemplary embodiments.

### Exemplary embodiments

### Grinding tests

**R1 (reference):** In a first example, 10 kg of cement were produced from 9.5 kg of cement clinker and 500 g of sulfate carrier raw materials (preheated to 130°C). No grinding aid but 15 g of water was added. After 100 minutes of grinding at 130°C on a laboratory ball mill, a Blaine fineness of about 4'320 m²/g was achieved.

**E1:** A second example was performed in the same way as example 1. However, the 15 g of water of example 1 was replaced by a grinding aid comprising 12 g water and 3 g of a mixture of two chemically different ethoxylated fatty alcohols (an ethoxylated C12 - C16 fatty alcohol and an ethoxylated C16 - C18 fatty alcohol fatty alcohols; 0.03 wt.% by weight of mineral binder). The Blaine value after 80 minutes was 4'150 m²/g and after 90 minutes 4'240, i.e. essentially the same as example with example 1 after 100 min. Thus, the same fineness was reached 10 minutes earlier, compared with the reference example 1.

These results show that even a rather low proportion of 0.03 wt.% of the grinding aid according to the invention is capable of considerably reducing the grinding time.

### Production of semi-dry concrete bricks

In an exemplary embodiment, a series of bricks made from semi-dry concrete) with following composition were produced: 1087 g mineral binder (cement), 1350 g sand (1-3 mm), 900 g sand (0.2 -1 mm), 2251 g sand (0.1 - 0.3 mm) and 431.5 g of water. As indicated in the following, depending on the specific embodiments, grinding aids/surfactants were added at the grinding stage of the mineral binder or upon mixing the components of the compositions (cf. table 1).

In each case, in a first step the mineral binder was ground in a manner similar to example 1 and the mineral binder was used to produce a semi-dry concrete composition which then was placed in a mold and compacted with a compaction tool.

The properties of the workable semi-dry concrete compositions as well as the hardened products were evaluated. The workable semi-dry concrete was subjected to a truncated cone test based on EN 1097-6:2022 page 43, third-last paragraph. The determination of the compressive strength (in N / mm ²) was carried out according to standard EN 12390-1 to 12390-4.

Details about the experiments and the results of the strength measurements are indicated in table 1.

**Table 1**

| *Experiment* | *Compressive strength [N*/*mm²] after 28 days* |
|---|---|
| **R2:** No grinding aid added during grinding; no additive added to semi-dry mineral binder composition after grinding | 74 |
| **R3:** No grinding aid added during grinding; 0.3 wt.% of a solution of surfactants¹⁾ added to semi-dry mineral binder composition after grinding | 71 |
| **E3:** 0.3 wt.% of a solution of surfactants¹⁾ added to mineral binder before grinding; no further additive added after grinding | 72 |

| | |
|---|---|
| ¹⁾ Solution of a mixture of two chemically different ethoxylated fatty alcohols (an ethoxylated C12 - C16 fatty alcohol and an ethoxylated C16 - C18 fatty alcohol fatty alcohols). The content of the ethoxylated fatty alcohols in the solution was about 5 wt.%. The solution was used with a proportion of 0.3 wt.% with respect to the mineral binder. | |

For reference examples **R2** and **R3** the grinding time was considerably longer than for experiment **E3.** Thus, for reference examples **R2** and **R3** an additional grinding aid would be needed to reduce the grinding time. The mold filling with examples **R3** and **E3** was clearly better than for example **R2.** Also, the semi-dry concrete according to example **E3** performed optimally in the truncated cone test and did essentially not collapse but retained its shape defined by the truncated cone-shaped mold.

### Production of standard mortar samples

In an exemplary embodiment, a series of standard mortar samples (w/c = 0.45; flow table spread > 200 mm; slump > 160 mm) were produced. In each case, in a first step the mineral binder was ground in a manner similar to example 1 and the so obtained mineral binder was used to produce a standard mortar composition, which then was placed in a mold to obtain a hardened test specimen.

The properties of the workable standard mortar compositions as well as the hardened test specimens were evaluated. Specifically, the flow table spread of the compositions were measured according to standard DIN EN 1015-3:2007 and the air void content was measured according to standard DIN EN 1015-7:1998.

Details about the experiments and the results of the strength measurements are indicated in table 2.

**Table 2**

| *Experiment* | *Air void content [%]* | *Flow table spread [mm]* |
|---|---|---|
| **R4:** No grinding aid added during grinding; no additive added to semi-dry mineral binder composition after grinding | 4.4 | 219 |
| **E4:** 0.3 wt.% of a solution of surfactants¹⁾ added to mineral binder before grinding; no further additive added after grinding | 11.0 | 240 |

| | | |
|---|---|---|
| ¹⁾ Solution of a mixture of two chemically different ethoxylated fatty alcohols (an ethoxylated C12 - C16 fatty alcohol and an ethoxylated C16 - C18 fatty alcohol fatty alcohols). The content of the ethoxylated fatty alcohols in the solution was about 5 wt.%. The solution was used with a proportion of 0.3 wt.% with respect to the mineral binder. | | |

For reference example **R4** the grinding time was considerably longer than for experiment **E4**. Thus, for reference examples **R4** an additional grinding aid would be needed to reduce the grinding time.

As evident from table 2, the air void content and flow table spread can be increased significantly. Therefore, the grinding aid according to the invention can be used as a combined grinding aid, air entraining agent and plasticizer in mineral binder compositions.

It will be appreciated by those skilled in the art that the present invention can be implemented in other specific forms without departing from the spirit or essential characteristics thereof. The presently disclosed embodiments are therefore considered in all respects to be illustrative and not restrictive.

## Claims

1. Method for producing a mineral binder, the method comprising a step of grinding raw mineral binder, especially cement clinker, with a grinding aid, whereby the grinding aid comprises at least one non-ionic and/or anionic surfactant, whereby a longest linear chain of consecutive carbon-carbon (C-C) and/or carbon-oxygen (C-O) bonds of the surfactant has 4 - 100, especially 10 - 75, chemical bonds, especially single bonds.

2. Method according to claim 1, whereby the at least one surfactant comprises an alkyl chain and optionally an alkylene oxide chain, whereby a chain length of the alkyl chain and the optional alkylene oxide chain of the surfactant, in terms of a number of consecutive carbon-carbon (C-C) and/or carbon-oxygen (C-O) bonds, is 4 - 100, especially 10 - 75.

3. Method according to any of preceding claims, whereby the surfactant is selected from fatty alcohols, alkoxylated fatty alcohols, fatty acids, as well as their sulfonates and/or sulfates; in particular having 4 - 100, especially 10 - 75, carbon and/or oxygen atoms.

4. Method according to any of preceding claims, whereby the surfactant is based on C8 - C32 fatty alcohols, especially C12 - C18 fatty alcohols; alkoxylated C8 - C32 fatty alcohols, especially alkoxylated C12 - C18 fatty alcohols; C8 - C32, especially C12 - C18, fatty acids; alkoxylated C8 - C32 fatty acids, especially alkoxylated C12 - C18 fatty acids; C8 - C32, especially C12 - C18, fatty alcohol sulfonates and/or C8 - C32, especially C12 - C18, fatty alcohol sulfates.

5. Method according to any of preceding claims, whereby the surfactant comprises C12 - C16 fatty alcohols that are ethoxylated with 3-25 alkylene oxide units and/or C16 - C18 fatty alcohols that are ethoxylated with 3-25 alkylene oxide units.

6. Method according to any of preceding claims, whereby the surfactant comprises a mixture of two chemically different ethoxylated fatty alcohols, whereby, preferably, the first ethoxylated fatty alcohol in the mixture is selected form C12 - C16 fatty alcohols that are ethoxylated with 3 - 25 ethylene oxide units and a second ethoxylated fatty alcohol in the mixture is selected from C16 - C18 fatty alcohols that are ethoxylated with 3 - 25 ethylene oxide units, whereby, preferably a weight ratio between the two different ethoxylated fatty alcohols is from 40:60 - 60:40, especially 45:55 - 55:45.

7. Method according to any of preceding claims, whereby a proportion of the surfactant is 0.001 - 0.1 wt.%, especially 0.003 - 0.05 wt.%, in particular 0.006 - 0.015 wt.%, with respect to the weight of the raw mineral binder to be ground.

8. Method according to any of preceding claims, whereby the surfactant is provided and/or used in the form of a solution in a liquid medium, especially an organic solvent, whereby a weight proportion of the surfactant in the dispersion is from 0.01 - 50 wt.%, especially 0.1 - 20 wt.%, in particular 0.5 - 7 wt.%, with respect to the overall weight of the solution.

9. Method for producing a mineral binder composition comprising the steps of:
a) Producing a mineral binder with the method according to any of preceding claims;
b) Mixing the ground mineral binder of step a) with aggregates, water and/or further additives to obtain the mineral binder composition.

10. Method according to claim 9, whereby a semi-dry mineral binder composition is produced.

11. Method according to any of claims 9 - 10, whereby the semi-dry mineral binder composition is a composition that, when subjected to a truncated cone test based on EN 1097-6:2022 essentially retains its shape.

12. Method according to any of claims 9 - 11, whereby the mineral binder composition comprises aggregates, especially sand and/or gravel, and, with respect to the weight of the mineral binder and the aggregates in the composition, the mineral binder composition comprises 10 - 35 wt.%, especially 15 - 23 wt.% of mineral binder, especially cement, and 65 - 90 wt.%, especially 77 - 85 wt.%, of the aggregates.

13. A mineral binder composition, especially obtainable by a method according to any of claims 9 - 12, comprising: a) a mineral binder, b) a grinding aid as defined in any of preceding claims; and, optionally, c) water; and, optionally, d) aggregates and/or further additives.

14. A method for producing a precast element, especially a kerb or a paver, comprising the steps of (i) producing a mineral binder composition with a method according to any of claims 9-12 and/or providing a mineral binder composition according to claim 13, (ii) placing the mineral binder composition in a mold and (ii) compacting the mineral binder composition in the mold, especially by pressing with a stamp.

15. A molded body, especially a paver, obtainable by hardening a mineral binder composition according to claim 13 or by a method according to any of claims 14.

16. Use of a surfactant as described in any of preceding claims as a grinding aid for grinding of a mineral binder material.

17. Use of a surfactant as described in any of preceding claims as a combined grinding aid for mineral binder material and as a filling and compaction aid for semi-dry mineral binder compositions.

18. Use of a surfactant as described in any of preceding claims as a combined grinding aid for mineral binder material and air entraining agent and/or plasticizer, especially in a mortar concrete composition having a slump of > 100 mm whereby the slump is measured according to DIN EN 12350-2:2019.
